# EUROPEAN PATENT APPLICATION

(11) **EP 4 297 134 A1**
(43) Date of publication of application: **27.12.2023**
(21) Application number: 22785046.8
(22) Date of filing: 15.02.2022
(51) Int. Cl.: H01M 4/86, H01M 4/92, H01M 4/90, H01M 4/88, H01M 8/1004, H01M 8/10

(54) **CATALYST LAYER FOR FUEL CELL AND MANUFACTURING METHOD THEREFOR, MEMBRANE-ELECTRODE ASSEMBLY AND MANUFACTURING METHOD THEREFOR, AND FUEL CELL**

(30) Priority: 07.04.2021 KR 20210045038
(71) Applicant: Kolon Industries, Inc., Seoul 07793 (KR)
(72) Inventor: KIM, Jung Ho, Seoul 07793 (KR); KIM, Jun Young, Seoul 07793 (KR); SONG, Kah Young, Seoul 07793 (KR); KONG, Nak Won, Seoul 07793 (KR); LEE, Ju Sung, Seoul 07793 (KR); NAM, Kyoung Sik, Seoul 07793 (KR); PARK, Chan Mi, Seoul 07793 (KR)
(74) Representative: Ter Meer Steinmeister & Partner
(86) International application number: PCT/KR2022/095030
(87) International publication number: WO 2022/216138

(57) **Abstract**

Provided is a catalyst layer for fuel cell having improved heat-dissipating performance and durability. The catalyst layer for fuel cell according to the present invention is a catalyst layer for fuel cell comprising a first composite and a second composite, wherein the first composite includes: a supporting material, a catalyst including metal particles supported on the supporting material, and a first ionomer coated on the surface of the catalyst; the second composite includes a heat-dissipating material and a second ionomer, the second ionomer is not coated on the surface of the catalyst, and the first ionomer and the second ionomer are identical with or different from each other.

## Description

### TECHNICAL FIELD

The present invention relates to a catalyst layer for fuel cell, a method for manufacturing the catalyst layer, a membrane-electrode assembly, a method for manufacturing the membrane-electrode assembly, and a fuel cell. More particularly, the present invention relates to a catalyst layer for fuel cell that not only efficiently discharges the heat generated inside a membrane-electrode assembly by means of the excellent thermal conductivity of a heat-dissipating material but also prevents a decrease in the humidity caused by high temperature, and increases the bonding force of a polymer electrolyte membrane and a catalyst layer by a second composite to enhance the durability of a membrane-electrode assembly; a method for manufacturing the catalyst layer; a membrane-electrode assembly; a method for manufacturing the membrane-electrode assembly; and a fuel cell.

### RELATED ART

Fuel cells are cells equipped with a power generation system that converts chemical reaction energy such as an oxidation/reduction reaction of hydrogen and oxygen contained in hydrocarbon-based fuel cell materials, such as methanol, ethanol, and natural gas, directly to electrical energy, and fuel cells are in the limelight as a next-generation clean energy source that can substitute fossil energy due to the environment-friendly features such as high energy effectiveness and reduced discharge of contaminants.

These fuel cells have an advantage that can emit a wide range of power outputs with a stack configuration obtained by lamination of unit cells, and since fuel cells exhibit energy densities 4 to 10 times higher than those of small-sized lithium batteries, attention has been paid to these fuel cells as small-sized and portable power supplies.

A stack that substantially generates electricity in a fuel cell has a structure in which several to several dozen unit cells each composed of a Membrane-Electrode Assembly (MEA) and a separator (or also referred to as a Bipolar plate) are laminated, and the membrane-electrode assembly generally has a structure in which an anode electrode (or a fuel electrode) and a cathode electrode (or an air electrode) are respectively formed, with an electrolyte membrane interposed therebetween.

Fuel cells can be classified into alkaline electrolyte membrane fuel cells, Polymer Electrolyte Membrane Fuel Cells (PEMFC), and the like depending on the state and type of the electrolyte, and among them, polymer electrolyte membrane fuel cells are attracting attention as power supply devices for portable, vehicle, and domestic use owing to their advantages such as low operation temperature such as below 100°C, rapid start-up and response characteristics, and excellent durability.

Representative examples of the polymer electrolyte membrane fuel cells include a Proton Exchange Membrane Fuel Cell (PEMFC) that uses hydrogen gas as the fuel, and a Direct Methanol Fuel Cell (DMFC) that uses liquid methanol as the fuel.

To briefly describe the reaction occurring in a polymer electrolyte membrane fuel cell, first, when a fuel such as hydrogen gas is supplied to an anode electrode, hydrogen ions (H⁺) and electrons (e⁻) are produced by an oxidation reaction of the hydrogen gas at the anode electrode. The produced hydrogen ions are delivered to the cathode electrode through the polymer electrolyte membrane, and the produced electrons are delivered to the cathode electrode through an external circuit. At the cathode electrode, oxygen gas is supplied, oxygen is combined with hydrogen ions and electrons, and water is produced by a reduction reaction of oxygen.

On the other hand, there are still many technical barriers to be solved in order to realize commercialization of polymer electrolyte membrane fuel cells, and essential improvement factors are realization of high performance, a long life time, and low price. A constituent element that exerts greatest influence on these improvement factors is the membrane-electrode assembly.

Conventional membrane-electrode assemblies tend to have difficulties in normally exhibiting high performance in an environment with specific temperature and relative humidity, particularly under high temperature or low humidity conditions. Accordingly, a polymer electrolyte membrane fuel cell to which a conventional membrane-electrode assembly is applied faces limitations in the range of use.

Therefore, research has been continuously conducted to solve the problem that the humidity is lowered by high temperature in a polymer electrolyte membrane fuel cell and to realize high mechanical strength.

On the other hand, a decal method in which a coating composition is first coated on a substrate such as Teflon (or a decal film) and then a catalyst layer thus prepared is transferred to a polymer electrolyte membrane, has a problem that an ionomer excess region is raised upward to impede mass transfer, and as a portion with relatively less ionomer is disposed on the polymer electrolyte membrane side, the interfacial binding properties are deteriorated. In order to solve the above-described problem, studies have been continuously conducted on the direct coating technology of directly applying a coating composition on a polymer electrolyte membrane.

### SUMMARY

An object of the present invention is to provide a catalyst layer for fuel cell that efficiently discharges the heat generated inside a membrane-electrode assembly by means of the excellent thermal conductivity of a heat-dissipating material.

Another object of the present invention is to provide a catalyst layer for fuel cell that solves a problem of having deteriorated performance of a fuel cell under high temperature or low humidity conditions, by applying a heat-dissipating material to the fuel cell catalyst layer.

Another object of the present invention is to provide a catalyst layer for fuel cell having improved mechanical durability, which is obtained by randomly disposing a second composite including a heat-dissipating material and a second ionomer at the interface between a polymer electrolyte membrane and a catalyst layer to enhance the binding force of the polymer electrolyte membrane and the catalyst layer.

Still another object of the present invention, which is different from the above-described objects, is to provide, in order to solve the problems of the above-described decal method, a method for manufacturing a catalyst layer for fuel cell by which a step of mixing a first ionomer solution and an aqueous solution having a catalyst dispersed therein, and subjecting this mixture to dispersing, drying, and redispersing so as to prepare a first homogeneous mixture, and a step of mixing a heat-dissipating material and a second ionomer solution to prepare a second homogeneous mixture including the heat-dissipating material, are separately carried out, the second homogenous mixture is mixed with the first homogenous mixture, and thereby a coating composition that is directly coated on a polymer electrolyte membrane is manufactured.

Still another object of the present invention, which is different from the above-described objects, is to provide a membrane-electrode assembly including the above-described fuel cell catalyst layer.

Still another object of the present invention, which is different from the above-described objects, is to provide a method for manufacturing a membrane-electrode assembly, by which the above-described coating composition is coated directly on the above-described polymer electrolyte membrane, subsequently the coated polymer electrolyte membrane is dried, and thereby a second composite homogeneously dispersed in the coating composition is settled on the interface between the polymer electrolyte membrane and the catalyst layer to enhance the interfacial binding force.

Still another object of the present invention, which is different from the above-described objects, is to provide a fuel cell including the above-described membrane-electrode assembly.

The objects of the present invention are not intended to be limited to the objects mentioned above, and other objects and advantages of the present invention that are not mentioned herein will be understood by the following description and will be more clearly understood by the embodiments of the present invention. Furthermore, it will be easily understood that the objects and advantages of the present invention can be realized by the means shown in the claims and combinations thereof.

### MEANS FOR SOLVING PROBLEM

According to an embodiment of the present invention for achieving the above-described objects, there is provided a catalyst layer for fuel cell comprising a first composite and a second composite, wherein the first composite includes a supporting material, a catalyst including metal particles supported on the supporting material, and a first ionomer coated on the surface of the catalyst, the second composite includes a heat-dissipating material and a second ionomer, the second ionomer is not coated on the surface of the catalyst, and the first ionomer and the second ionomer are identical with or different from each other.

According to another embodiment of the present invention for achieving the above-described objects, there can be provided a method for manufacturing a fuel cell catalyst layer, the method including: (S1) a step of homogeneously mixing a first ionomer solution and an aqueous solution having a catalyst dispersed therein, and dispersing these solutions to prepare a first homogenous mixture; and (S2) a step of adding a second homogeneous mixture having a heat-dissipating material and a second ionomer solution mixed therein to the first homogenous mixture, and dispersing these mixtures to prepare a coating composition.

According to still another embodiment of the present invention for achieving the above-described objects, there can be provided a membrane-electrode assembly including a polymer electrolyte membrane and the above-described catalyst layer for fuel cell disposed on at least one surface of the polymer electrolyte membrane.

According to still another embodiment of the present invention for achieving the above-described objects, there can be provided a method for manufacturing a membrane-electrode assembly, the method including a step of directly coating a coating composition on at least one surface of a polymer electrolyte membrane; and a step of drying the polymer electrolyte membrane coated with the coating composition, in which a method for preparing the coating composition includes: (S1) a step of homogeneously mixing a first ionomer solution and an aqueous solution having a catalyst dispersed therein and dispersing these solutions to prepare a first homogeneous mixture; and (S2) a step of adding a second homogeneous mixture having a heat-dissipating material and a second ionomer solution mixed therein to the first homogeneous mixture and dispersing these mixtures.

According to still another embodiment of the present invention for achieving the above-described objects, there can be provided a fuel cell including the above-described membrane-electrode assembly.

### EFFECT OF THE INVENTION

According to an embodiment of the present invention, there can be provided a catalyst layer for fuel cell that efficiently discharges the heat generated inside a membrane-electrode assembly by means of the excellent thermal conductivity of a heat-dissipating material.

According to another embodiment of the present invention, there can be provided a catalyst layer for fuel cell that solves a problem of having deteriorated performance of a fuel cell under high temperature or low humidity conditions, by applying a heat-dissipating material to the fuel cell catalyst layer.

According to still another embodiment of the present invention, there can be provided a catalyst layer for fuel cell having improved mechanical durability, which is obtained by randomly disposing a second composite including a heat-dissipating material and a second ionomer at the interface between a polymer electrolyte membrane and a catalyst layer, and thereby enhancing the binding force between the polymer electrolyte membrane and the catalyst layer.

According to an embodiment of the present invention, there can be provided, in order to solve the problems of the above-described decal method, a method for manufacturing a catalyst layer for fuel cell by which a step of mixing a first ionomer solution and an aqueous solution having a catalyst dispersed therein, and subjecting this mixture to dispersing, drying, and redispersing to prepare a first homogeneous mixture, and a step of mixing a heat-dissipating material and a second ionomer solution to prepare a second homogeneous mixture including the heat-dissipating material, are separately carried out, the second homogeneous mixture is mixed with the first homogeneous mixture, and thereby a coating composition that is directly coated on a polymer electrolyte membrane is manufactured.

According to an embodiment of the present invention, there can be provided a method for manufacturing a membrane-electrode assembly, by which the coating composition is directly coated on the polymer electrolyte membrane, subsequently the coated polymer electrolyte membrane is dried, and thereby the second composite homogeneously distributed in the coating composition is settled at the interface between the polymer electrolyte membrane and the catalyst layer to enhance the interfacial binding force.

Specific effects of the present invention as well as the above-mentioned effects will be described together below, while explaining specific contents for carrying out the invention.

### BRIEF DESCRIPTION OF THE DRAWINGS

Fig. 1 is a cross-sectional view illustrating a catalyst layer for fuel cell according to an embodiment of the present invention.
Fig. 2 is a flow chart showing a method for manufacturing a catalyst layer for fuel cell according to an embodiment of the present invention.
Fig. 3 is a cross-sectional view illustrating a membrane-electrode assembly according to an embodiment of the present invention.
Fig. 4 is a schematic diagram for explaining that in a method for manufacturing a membrane-electrode assembly according to an embodiment of the present invention, a second composite uniformly dispersed in a coating composition is settled at the interface between a polymer electrolyte membrane and a catalyst layer.
Fig. 5 is a schematic diagram for explaining a fuel cell according to an embodiment of the present invention.
Fig. 6 is a Transmission Electron Microscope (TEM) image of the electrode of the membrane-electrode assembly according to Example 1.
Fig. 7 is a Transmission Electron Microscope (TEM) image of the second composite according to Example 3.
Fig. 8 is a Scanning Electron Microscope (SEM) image of the electrode of the membrane-electrode assembly according to Example 4.
Fig. 9 is a Scanning Electron Microscope (SEM) image of the electrode when the amount of h-BN (hexagonal boron nitride) is 52% by weight based on the total weight of the second homogeneous mixture.
Fig. 10 is a Scanning Electron Microscope (SEM) image showing second composites randomly distributed at the interface (or a first segment) between a catalyst layer for fuel cell and a polymer electrolyte membrane according to an embodiment of the present invention.

### BEST MODE(S) FOR CARRYING OUT THE INVENTION

Hereinafter, various configurations of the present invention will be described in more detail so that those having ordinary skill in the art to which the present invention is pertained can easily carry out the present invention; however, these configurations are given for illustrative purpose only, and the scope of rights of the present invention is not limited by the following description.

An embodiment of the present invention provides a catalyst layer for fuel cell comprising a first composite and a second composite, wherein the first composite includes a supporting material, a catalyst including metal particles supported on the supporting material, and a first ionomer coated on the surface of the catalyst, the second composite includes a heat-dissipating material and a second ionomer, the second ionomer is not coated on the surface of the catalyst, and the first ionomer and the second ionomer are identical with or different from each other.

In the following description, the configuration of the present invention will be described in more detail with reference to the drawings.

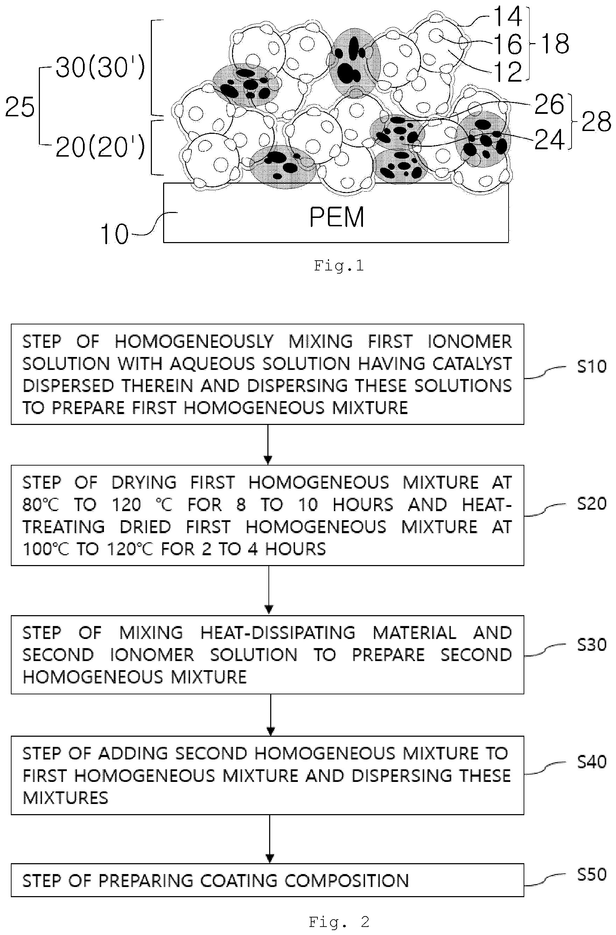

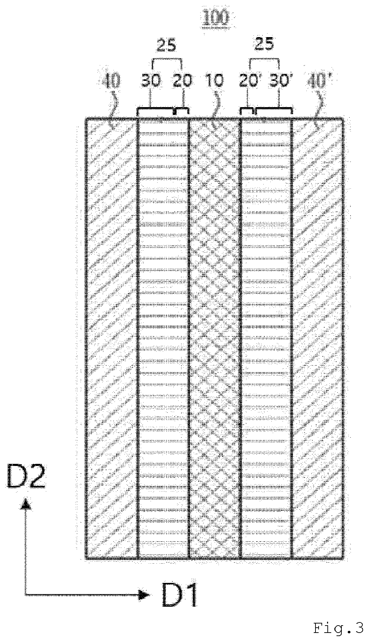

Fig. 1 is a cross-sectional view showing a catalyst layer for fuel cell according to an embodiment of the present invention. For the convenience of explanation, a polymer electrolyte membrane (10) and first to fourth segments (20, 20', 30, 30') will be described below in connection with Fig. 3.

The catalyst layer for fuel cell(25) according to the present invention may include a first composite (18) and a second composite (28) .

The first composite (18) may include a catalyst (16) including a supporting material (12) and metal particles supported on the supporting material (12), and a first ionomer (14) coated on the surface of the catalyst (16).

The supporting material (12) according to the present invention is a component that further facilitates electron exchange with the catalyst, and the supporting material may be any one selected from the group consisting of a carbon-based supporting material, a porous organic oxide, zeolite, and combinations thereof.

The carbon-based supporting material can be selected from graphite, Super P, carbon fibers, carbon sheets, carbon black, Ketjen black, Denka black, acetylene black, carbon nanotubes (CNT), carbon spheres, carbon ribbons, fullerene, activated carbon, carbon nanofibers, carbon nanowires, carbon nanoballs, carbon nanohorns, carbon nanocages, carbon nanorings, ordered nano-/mesoporous carbon, carbon aerogel, mesoporous carbon, graphene, stabilized carbon, activated carbon, and combinations of at least one or more of these; however, the carbon-based supporting material is not limited to these, and any supporting material that can be used in this art can be used without limitation.

The porous inorganic oxide may be at least one or more selected from the group consisting of zirconia, alumina, titania, silica, and ceria.

The surface area of the supporting material (12) is preferably 50 m²/g or more, and the average particle size is preferably 10 to 300 nm (nanometers). When the surface area of the supporting material is less than the above-described value range, a uniform distribution of the metal particles cannot be obtained.

Regarding the catalyst (16) including metal particles according to the present invention, any catalyst that can be used as a catalyst for a hydrogen gas oxidation reaction and/or an oxygen gas reduction reaction may be used.

The metal particles according to the present invention may be particles of any one selected from the group consisting of a platinum-based metal, a platinum-based alloy, a non-platinum-based metal, and a non-platinum-based alloy. The metal particles may be disposed on the surface of the supporting material (12) or may be caused to penetrate into the inner part of the supporting material (12) while filling the internal pores of the supporting material (12) .

Regarding the platinum-based metal, platinum (Pt) and/or a Pt-M alloy can be used. This M may be any one or more selected from the group consisting of palladium (Pd), ruthenium (Ru), iridium (Ir), osmium (Os), gallium (Ga), titanium (Ti), vanadium (V), chromium (Cr), manganese (Mn), iron (Fe), cobalt (Co), nickel (Ni), copper (Cu), silver (Ag), gold (Au), zinc (Zn), tin (Sn), molybdenum (Mo), tungsten (W), lanthanum (La), and rhodium (Rh).

Specifically, regarding the platinum-based alloy (Pt-M), Pt-Pd, Pt-Sn, Pt-Mo, Pt-Cr, Pt-W, Pt-Ru, Pt-Ni, Pt-Ru-W, Pt-Ru-Ni, Pt-Ru-Mo, Pt-Ru-Rh-Ni, Pt-Ru-Sn-W, Pt-Ru-Ir-Ni, Pt-Co, Pt-Co-Mn, Pt-Co-Ni, Pt-Co-Fe, Pt-Co-Ir, Pt-Co-S, Pt-Co-P, Pt-Fe, Pt-Fe-Ir, Pt-Fe-S, Pt-Fe-P, Pt-Au-Co, Pt-Au-Fe, Pt-Au-Ni, Pt-Ni, Pt-Ni-Ir, Pt-Cr, Pt-Cr-Ir, or a mixture of two or more of these can be used.

Regarding the non-platinum-based metal (Non-platinum metal), one or more selected from the group consisting of palladium (Pd), ruthenium (Ru), iridium (Ir), osmium (Os), and Non-platinum alloys can be used.

Regarding the non-platinum-based alloy, Ir-Fe, Ir-Ru, Ir-Os, Co-Fe, Co-Ru, Co-Os, Rh-Fe, Rh-Ru, Rh-Os, Ir-Ru-Fe, Ir-Ru-Os, Rh-Ru-Fe, Rh-Ru-Os, Fe-N, Fe-P, Co-N, or a mixture of two or more of these can be used.

The first ionomer (14) according to the present invention can be coated on the surface of the catalyst (16) including the metal particles. Furthermore, the first ionomer (14) can also be coated on the surface of the supporting material (12).

The first ionomer (14) may be any one selected from the group consisting of a fluorine-based ionomer, a hydrocarbon-based ionomer, and mixtures of these.

The fluorine-based ionomer may be a fluoropolymer containing fluorine in the main chain having a cation exchange group or an anion exchange group, or a partially fluorinated polymer such as a polystyrene-graft-ethylene tetrafluoroethylene copolymer or a polystyrene-graft-polytetrafluoroethylene copolymer. The fluorine-based ionomer may be, for example, poly(perfluorosulfonic acid), poly(perfluorocarboxylic acid), a copolymer of tetrafluoroethyene and fluorovinyl ether including a sulfonic acid group, a defluorinated polyether ketone sulfide, or a fluorine-based polymer including a mixture of these.

The cation exchange group is a functional group that can deliver a cation such as a hydrogen ion, and the cation exchange group may be, for example, an acidic group such as a sulfonic acid group, a carboxyl group, a boronic acid group, a phosphoric acid group, an imide group, a sulfonimide group, or a sulfonamide group and may be generally a sulfonic acid group or a carboxyl group.

The anion exchange group is a polymer that can deliver a hydroxy ion or an anion such as a carbonate or bicarbonate ion, and regarding the anion exchange group, a hydroxide or halide (generally chloride) form is commercially available. The anion exchange group can be used for industrial water purification, metal separation, a catalysis process, or the like.

Regarding a polymer containing the anion exchange group, generally a polymer doped with a metal hydroxide can be used, and specifically, poly(ether sulfone), polystyrene, a vinyl-based polymer, poly(vinyl chloride), poly(vinylidene fluoride), poly(tetrafluoroethylene), poly(benzimidazole), or poly(ethylene glycol), all of which are doped with metal hydroxides, can be used.

The hydrocarbon-based ionomer may be a hydrocarbon-based polymer having a cation exchange group or an anion exchange group. For example, the hydrocarbon-based polymer may be a hydrocarbon-based polymer including at least one selected from the group consisting of imidazole, benzimidazole, polyamide, polyamideimide, polyimide, polyacetal, polyethylene, polypropylene, an acrylic resin, polyester, polysulfone, polyether, polyetherimide, polyester, polyether sulfone, polyetherimide, polycarbonate, polystyrene, polyphenylene sulfide, polyether ether ketone, polyether ketone, polyaryl ether sulfone, polyphosphazene, and polyphenylquinoxaline, in the main chain.

The hydrocarbon-based ionomer may be sulfonated polyimide (S-PI), sulfonated polyarylether sulfone (S-PAES), sulfonated polyether ether ketone (S-PEEK), sulfonated polybenzimidazole (S-PBI), sulfonated polysulfone (S-PSU), sulfonated polystyrene (S-PS), sulfonated polyphosphazene, sulfonated polyquinoxaline, sulfonated polyketone, sulfonated polyphenylene oxide, sulfonated polyether sulfone, sulfonated polyether ketone, sulfonated polyphenylene sulfone, sulfonated polyphenylene sulfide, sulfonated polyphenylene sulfide sulfone, sulfonated polyphenylene sulfide sulfone nitrile, sulfonated polyarylene ether, sulfonated polyarylene ether nitrile, sulfonated polyarylene ether ether nitrile, sulfonated polyarylene ether sulfone ketone, and mixtures of these; however, the technical ideas of the present invention are not limited to these.

The second composite (28) according to the present invention may include a heat-dissipating material (26) and a second ionomer (24) .

The heat-dissipating material (26) may be any one selected from the group consisting of metal nanoparticles, ceramic nanoparticles, ultrahigh molecular weight polyethylene, polyacetylene, polyimide, carbon-based nanoparticles, and combinations of these.

The metal nanoparticles may be any one selected from the group consisting of metal particles containing Al, Mg, Cu, Ni, or Ag, which have excellent thermal conductivity, and having a core-shell structure. The size of the metal nanoparticles is preferably 5 to 30 nm (nanometers).

In the present specification, the core-shell structure is defined as a form in which a substance that forms the shell (or the skin) envelops a substance that forms the core (or the center) . Specifically, the metal particles having a core-shell structure according to the present invention may be a heat-dissipating material in which a chemical and mechanical protective layer for the core substance is formed by the shell portion, and which has excellent thermal conductivity while maintaining the respective intrinsic properties of the core-constituting substance and the shell-constituting substance.

In the metal particles having the core-shell structure, a metal or a metalloid belonging to the Groups 2 to 15 in the Periodic Table of Elements can be used, and a metal that has excellent or relatively stable thermal conductivity to the shell can be used. For example, Cu@Ag, Fe@Al, or Cu@Au can be used.

Since the inorganic oxide or metal oxide constitutes the shell, the metal particles having the core-shell structure can efficiently discharge the heat generated inside the membrane-electrode assembly during the operation of the fuel cell.

The ceramic nanoparticles may be particles of any one or more selected from the group consisting of boron nitride, aluminum nitride, aluminum oxide, silicon carbide, and beryllium oxide.

Particularly, hexagonal boron nitride (h-BN) in the boron nitride has a plate-like structure, which has physical properties similar to those of graphite, as compared with general boron nitride, and hexagonal boron nitride has excellent thermal conductivity, insulating properties, and chemical stability at high temperature.

The ceramic nanoparticles have excellent thermal conductivity and may have an effect of easily transferring heat to the outside of the catalyst layer and preventing evaporation of moisture in the catalyst layer.

The average diameter of the ceramic nanoparticles is preferably 10 to 500 nm (nanometers), and more preferably 30 to 300 nm (nanometers).

When the average diameter of the ceramic nanoparticles is larger than the above-described value range, the increase in the surface area due to large particles is negligible so that there can be a problem that a heat-dissipating effect may not be appropriately imparted. When the average diameter is smaller than the above-described value range, the particles may aggregate, or an agglomeration phenomenon may occur around the catalyst so that there can be a problem that the functions of the catalyst may be rather deteriorated.

The weight average molecular weight (Mw) of the ultrahigh molecular weight polyethylene may be 3,500,000 to 10,500,000 g/mol. When the weight average molecular weight of the ultrahigh molecular weight polyethylene is less than the above-described value range, the heat discharge efficiency of the catalyst layer for fuel cell may be decreased.

The polyacetylene has a conjugation structure, which is a molecular structure in which carbon-carbon single bonds and double bonds are alternately arranged. Therefore, the π-electrons of the polyacetylene are delocalized over the entire molecular structure, and the polyacetylene can have an excellent electrical conduction effect and an excellent heat dissipation effect.

When the weight average molecular weight (Mw) of the polyacetylene is 20,000 to 1,000,000 g/mol, the polyacetylene can efficiently discharge the heat inside the catalyst layer due to the long-chained structure of the polyacetylene. However, the technical ideas of the present invention are not limited to the above-described weight average molecular weight of the polyacetylene.

The polyimide is known as a polymer having excellent heat-dissipating performance as well as excellent mechanical strength, chemical resistance, and chemical resistance, and the polyimide can be used as the heat-dissipating material.

The carbon-based nanoparticles can be selected from the group consisting of carbon nanofibers, carbon black, acetylene black, carbon nanotubes (CNT), carbon spheres, carbon ribbons, fullerene, graphene, activated carbon, and combinations of one or more of these; however, the carbon-based nanoparticles are not limited to these.

Particularly, when the carbon-based nanoparticles are used as a mixture with a metal, the heat dissipation effect can be more prominent, and the heat generated in a membrane-electrode assembly to which the catalyst layer for fuel cell (25) is applied can be effectively discharged.

Similarly, when the ultrahigh molecular weight polyethylene is used as a mixture with a metal, the heat dissipation effect can be more prominent, and the heat generated in a membrane-electrode assembly to which the catalyst layer for fuel cell(25) is applied can be effectively discharged.

The second ionomer (24) according to the present invention does not have to be coated on the surface of the catalyst (16) . In other words, the second ionomer (24) can include the heat-dissipating material (26), and the heat-dissipating material (26) can be in a state of being dispersed in the second ionomer (24). In other words, the second ionomer (24) may surround the heat-dissipating material (26).

The first ionomer (14) and the second ionomer (24) according to the present invention may be identical with or different from each other. Therefore, the substance of the first ionomer (14) and the substance of the second ionomer (24) may be identical with or different from each other.

Furthermore, the equivalent of the first ionomer (14) and the equivalent of the second ionomer (24) are each independently 600 to 1100 g/eq, and the equivalent of the first ionomer (14) and the equivalent of the second ionomer (24) can be different from each other.

According to an embodiment of the present invention, any one of the first ionomer (14) and the second ionomer (24) may be a fluorine-based ionomer, and the other may be a hydrocarbon-based ionomer.

According to another embodiment of the present invention, the first ionomer (14) may be a first hydrocarbon-based ionomer, and the second ionomer (24) may be a second hydrocarbon-based ionomer that is different from the first hydrocarbon-based ionomer.

According to another embodiment of the present invention, the first ionomer (14) may be a first fluorine-based ionomer, and the second ionomer (24) may be a second fluorine-based ionomer that is different from the first fluorine-based ionomer.

The catalyst layer for fuel cell(25) according to an embodiment of the present invention may further include a functional additive.

The functional additive may be at least one selected from the group consisting of a radical scavenger, gas barrier particles, a hydrophilic inorganic additive, an oxygen evolution reaction (OER) catalyst, and combinations of these.

The radical scavenger may include any one or more selected from the group consisting of a metal-based peroxide decomposition accelerator, an organic peroxide decomposition accelerator, and a peroxide decomposition accelerating salt compound.

The metal-based peroxide decomposition accelerator may include any one or more selected from the group consisting of cerium ion, nickel ion, tungsten ion, cobalt ion, chromium ion, zirconium ion, yttrium ion, manganese ion, iron ion, titanium ion, vanadium ion, molybdenum ion, lanthanum ion, neodymium ion, silver ion, platinum ion, ruthenium ion, palladium ion, and rhodium ion.

The metal-based peroxide decomposition accelerator may include an oxide of a metal or a noble metal. The oxide of a metal or a noble metal may include any one or more selected from the group consisting of cerium oxide, nickel oxide, tungsten oxide, cobalt oxide, chromium oxide, zirconium oxide, yttrium oxide, manganese oxide, iron oxide, titanium oxide, vanadium oxide, molybdenum oxide, lanthanum oxide, and neodymium oxide.

The organic peroxide decomposition accelerator may be any one or more selected from the group consisting of syringic acid, vanillic acid, protocatechuic acid, coumaric acid, caffeic acid, ferulic acid, chlorogenic acid, cynarine, gallic acid, and mixtures of these.

The peroxide decomposition accelerating salt compound may include a salt of a metal including a transition metal or a noble metal. The peroxide decomposition accelerating salt compound may be any one selected from the group consisting of carbonate, acetate, chloride, fluoride, sulfate, phosphate, tungstate, hydroxide, ammonium acetate, ammonium sulfate, acetylacetonate, and permanganate, and specific examples include, when cerium is taken as an example, cerium carbonate, cerium acetate, cerium chloride, cerium acetate, cerium sulfate, cerium ammonium acetate, and cerium ammonium sulfate, while examples of an organic metal complex salt include cerium acetylacetonate.

The gas barrier particles may be particles of any one selected from the group consisting of clay, montmorillonite, saponite, laponite, mica, fluorohectorite, kaolinite, vermiculite, and combinations of these.

The hydrophilic inorganic additive may be at least one selected from the group consisting of SnCt, silica, alumina, zirconia, mica, zeolite, phosphotungstic acid, silicon tungstic acid, zirconium hydrogen phosphate, and combinations of these. The hydrophilic inorganic additive can prevent the phenomenon of hydrogen ion conductivity decrease under high-temperature, low-humidity conditions.

The oxygen evolution reaction catalyst is micronized or uniformly dispersed within the catalyst layer for fuel cell and can enhance the durability of the catalyst layer for fuel cell through an effective water decomposition reaction. The oxygen evolution reaction catalyst may include an active substance of a platinum-based metal and/or a non-platinum-based metal such as described above. Hereinafter, with regard to the active substance of a platinum-based metal or a non-platinum-based metal, any description overlapping with the above-described parts will not be repeated.

Another embodiment of the present invention may be a method for manufacturing a fuel cell catalyst layer, the method including: (S1) a step of homogeneously mixing a first ionomer solution and an aqueous solution having a catalyst dispersed therein and dispersing these solutions to prepare a first homogeneous mixture; and (S2) a step of adding a second homogeneous mixture obtained by mixing a heat-dissipating material and a second ionomer solution to the first homogeneous mixture and dispersing these mixtures to prepare a coating composition.

In the step (S1), as a method of primarily dispersing a mixture in which the first ionomer solution and an aqueous solution having a catalyst dispersed therein are homogeneously mixed, any one method selected from the group consisting of a homogeneous mixer, a high-pressure dispersing machine, a ball mill, a powder mixer, and a resonant acoustic mixer can be used.

The method for manufacturing a catalyst layer for fuel cell according to another embodiment of the present invention may further include a step of drying the first homogeneous mixture at 80°C to 120°C for 8 to 10 hours, between the step (S1) and the step (S2) .

The method for manufacturing a catalyst layer for fuel cell may further include a step of heat-treating the dried first homogeneous mixture at 100°C to 120°C for 2 to 4 hours. When the dried first homogeneous mixture is heat-treated under the conditions that are out of the above-described value ranges, the ionomer may form strong bonds with the catalyst surface so that the activity of the catalyst may be deteriorated or the bonding force between the catalyst and the ionomer may not be sufficiently formed.

The method for manufacturing a catalyst layer for fuel cell may include a step of redispersing the heat-treated first homogeneous mixture to prepare a first composite.

The heat-dissipating material according to the present invention may be included in an amount of 1% to 51% by weight, and preferably 5% to 40% by weight, based on the total weight of the second homogeneous mixture. In other words, the heat-dissipating material may be included in an amount of 5% to 25% by weight, and preferably 6% to 20% by weight, based on the total solid content weight of the coating composition. When the content of the heat-dissipating material is less than the above-described value range, the heat generated in the membrane-electrode assembly may not be effectively discharged, and when the content is more than the above-described value range, the heat-dissipating material may agglomerate so that it may be difficult for the heat-dissipating material to be dispersed in the second ionomer solution, and the second ionomer may not function as a free ionomer so that the bonding force between the polymer electrolyte membrane and the catalyst layer may not be improved. Accordingly, the durability of the membrane-electrode assembly may not be improved.

Fig. 2 is a flow chart showing a method for manufacturing a catalyst layer for fuel cell according to an embodiment of the present invention. Any description overlapping with the above-described portion will be briefly described or will not be repeated.

According to Fig. 2, the method for manufacturing a catalyst layer for fuel cell according to an embodiment of the present invention may include: a step (S10) of homogeneously mixing a first ionomer solution and an aqueous solution having a catalyst dispersed therein and dispersing these solutions to prepare a first homogeneous mixture; a step (S20) of drying the first homogeneous mixture at 80°C to 120°C for 8 to 10 hours and heat-treating the dried first homogeneous mixture at 100°C to 120°C for 2 to 4 hours; a step (S30) of mixing a heat-dissipating material and a second ionomer solution to prepare a second homogeneous mixture; a step (S40) of adding the second homogeneous mixture to the first homogeneous mixture and dispersing these mixtures; and a step (S50) of preparing a coating composition.

According to an embodiment of the present invention, the step (S20) may include a step of redispersing the heat-treated first homogeneous mixture to prepare a first composite.

Another embodiment of the present invention is a membrane-electrode assembly including a polymer electrolyte membrane and the above-described catalyst layer for fuel cell disposed on at least one surface of the polymer electrolyte membrane.

Fig. 3 is a cross-sectional view showing a membrane-electrode assembly according to an embodiment of the present invention. Any description overlapping with the above-described portion will be briefly described or will not be repeated.

According to Fig. 3, a first direction (D1) may be defined as the thickness direction of a membrane in the present specification, and a second direction (D2) may be defined as a direction intersecting the first direction (D1). For example, the second direction (D2) may be a direction perpendicular to the first direction (D1).

The polymer electrolyte membrane (10) according to the present invention may include an ion conductor. The ion conductor may be any one selected from the group consisting of a fluorine-based ionomer, a hydrocarbon-based ionomer, and a mixture of these. The ion conductor may have a configuration identical with or different from the above-described configuration of the first ionomer. Any description overlapping with the above-described portion will not be repeated.

The polymer electrolyte membrane (10) according to the present invention may be in the form of a reinforced composite membrane in which pores of a porous support are filed with an ion conductor, such as a fluorine-based porous support such as e-PTFE having a fine structure of polymer fibrils or a fine structure with nodes connected to each other by fibrils, or a porous nanoweb support prepared by electrospinning or the like.

The thickness of the polymer electrolyte membrane (10) may be 3 to 100 µm (micrometers), and preferably 5 to 20 µm (micrometers). However, the technical ideas of the present invention are not limited to the above-described thickness of the polymer electrolyte membrane.

According to Fig. 1 and Fig. 3, the second composite (28) according to the present invention may be irregularly or randomly disposed to be in contact with a portion of the surface of the polymer electrolyte membrane (10). As the second composite (28) is brought into contact with a portion of the surface of the polymer electrolyte membrane (10), an ionomer-rich layer that is rich in the second ionomer may be formed, and the bonding force between the polymer electrolyte membrane (10) and the catalyst layer for fuel cell(25) may be increased to improve the durability of the membrane-electrode assembly.

According to Fig. 1 and Fig. 3, a portion of the catalyst layer for fuel cell(25) according to the present invention may be disposed on one surface of the polymer electrolyte membrane (10) and include a first segment (20) and a second segment (30).

Another portion of the catalyst layer for fuel cell(25) according to the present invention may be disposed on the other surface of the polymer electrolyte membrane (10), the other surface being on the opposite side of the above-described one surface, and include a third segment (20') and a fourth segment (30'). In the present specification, a segment is defined to have a meaning of encompassing a portion or a region, and in a broad sense, a layer.

The first and second segments (20, 30) can function as anodes that receive delivered hydrogen gas and produce hydrogen ions and electrons. The third and fourth segments (20', 30') can function as cathodes that receive the hydrogen ions and the electrons delivered through the polymer electrolyte membrane (10) and an external circuit (not shown in the diagram), respectively, and reduce oxygen gas supplied from the outside to produce water.

The first segment (20) according to an embodiment of the present invention may be in contact with the polymer electrolyte membrane (10). In other words, it is implied that no member is interposed between the polymer electrolyte membrane (10) and the first segment (20). The third segment (20') may also be in contact with the polymer electrolyte membrane (10), similarly to the first segment (20).

According to an embodiment of the present invention, the second segment (30) may be disposed on the first segment (20). Specifically, the second segment (30) may be disposed directly on the first segment (20) and may be integrated with the first segment (20). In the present specification, the phrase "another member is disposed directly on one member" is defined to mean that no member is interposed between the one member and the other member. Similarly, the fourth segment (30') may be disposed on the third segment (20'), and specifically, the fourth segment (30') may be disposed directly on the third segment (20').

According to Fig. 1 and Fig. 3, the second segment (30) according to an embodiment of the present invention does not have to include the second composite (28), or the content of the second composite (28) per unit volume of the second segment (30) may be smaller than the content of the second composite (28) per unit volume of the first segment (20). Similarly, the fourth segment (30') according to an embodiment of the present invention does not have to include the second composite (28), or the content of the second composite (28) per unit volume of the fourth segment (30') may be smaller than the content of the second composite (28) per unit volume of the third segment (20').

It is because when the coating composition is directly coated on one surface of the polymer electrolyte membrane (10), and then the coated polymer electrolyte membrane (10) is dried, the second composite (28) is settled on the polymer electrolyte membrane (10) side.

On the other hand, the thickness of the first segment (20) may be 10 to 800 nm (nanometers), and preferably 30 to 500 nm (nanometers). When the thickness of the first segment (20) is less than the above-described value range, the interfacial bonding force reinforcing effect may not be exhibited, and when the thickness is larger than the above-described value range, the quantity of ionomers may be increased so that there may be a problem of inhibiting mass transfer. The thickness of the third segment (20') may be in the above-described value range, similarly to the thickness of the first segment (20).

The thickness of the second segment (30) may be 0.5 to 20 µm (micrometers), and preferably 1 to 15 µm (micrometers). When the thickness of the second segment (30) is less than the above-described value range, the loading amount of the electrode may be decreased so that the activity may be reduced, and when the thickness is larger than the above-described value range, mass transfer may not be smooth so that resistance may be increased while the performance may be reduced. The thickness of the fourth segment (30') may be in the above-described value range, similarly to the thickness of the second segment (30).

According to Fig. 3, the membrane-electrode assembly (100) according to the present invention may additionally include a first gas diffusion layer (40) and a second gas diffusion layer (40').

The first gas diffusion layer (40) according to the present invention may be disposed on a portion of the catalyst layer for fuel cell(25). The first gas diffusion layer (40) may be disposed to face the polymer electrolyte membrane (10), with the above-described portion of the catalyst layer for fuel cell(25) interposed therebetween. In other words, the above-described portion of the catalyst layer for fuel cell(25) may be disposed between the first gas diffusion layer (40) and the polymer electrolyte membrane (10). Furthermore, the first gas diffusion layer (40) may be disposed to face the first segment (20), with the second segment (30) interposed therebetween.

The second gas diffusion layer (40') according to the present invention may be disposed on a portion different from the above-described portion in the catalyst layer for fuel cell (25). The second gas diffusion layer (40') may be disposed to face the polymer electrolyte membrane (10), with the above-described other portion of the catalyst layer for fuel cell(25) interposed therebetween. In other words, the above-described other portion of the catalyst layer for fuel cell(25) may be disposed between the second gas diffusion layer (40') and the polymer electrolyte membrane (10). Furthermore, the second gas diffusion layer (40') may be disposed to face the third segment (20'), with the fourth segment (30') interposed therebetween.

A porous conductive base material may be used so that smooth supply of hydrogen gas or oxygen gas to the first gas diffusion layer (40) and the second gas diffusion layer (40'), respectively. As a representative example thereof, carbon paper, carbon cloth, carbon felt, or metal cloth (referring to a porous film composed of a metal cloth in a fabric state, or a cloth formed from polymer fibers with a metal film formed on the surface of the cloth) can be used; however, the porous conductive base material is not limited to these.

Furthermore, regarding the first gas diffusion layer (40) and the second gas diffusion layer (40'), when a fluororesin that has been subjected to a water repellency treatment is used, the reactant diffusion efficiency can be prevented from being decreased by the water generated during operation of the fuel cell, which is preferable. Regarding the fluororesin, polytetrafluoroethylene, polyvinylidene fluoride, polyhexafluoropropylene, polyperfluoroalkyl vinyl ether, polyperfluorosulfonyl fluoride alkoxyvinyl ether, fluorinated ethylene propylene, polychlorotrifluoroethylene, or a copolymer of these can be used.

Still another embodiment of the present invention is a method for manufacturing a membrane-electrode assembly, the method including: a step of directly coating the above-described coating composition on at least one surface of a polymer electrolyte membrane; and a step of drying the polymer electrolyte membrane coated with the coating composition.

The step of drying the polymer electrolyte membrane coated with the coating composition may be a step of drying at 50°C to 150°C for 10 to 300 seconds. When the temperature of the drying step is less than the above-described value range or the drying time is less than the above-described value range, a sufficiently dried catalyst layer may not be formed, and when the drying temperature is higher than the above-described value range or the drying time is longer than the above-described value range, the process time may be unnecessarily lengthened, and cracks and the like may occur in the catalyst layer.

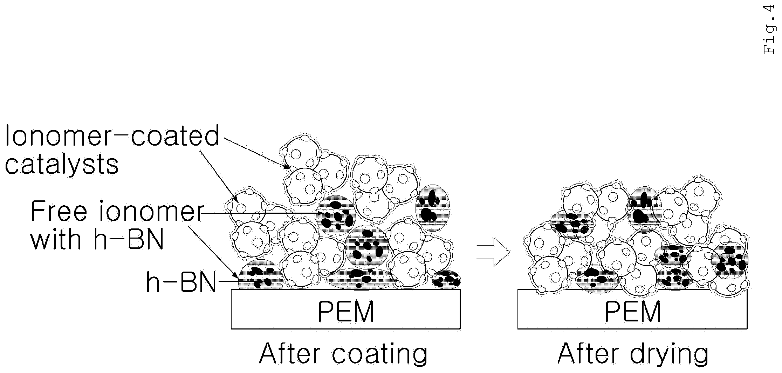

Fig. 4 is a schematic diagram for explaining that in the method for manufacturing a membrane-electrode assembly according to an embodiment of the present invention, a second composite homogeneously dispersed in the coating composition is settled at the interface between the polymer electrolyte membrane and the catalyst layer.

According to Fig. 4, the second composite is settled on the polymer electrolyte membrane through the step of drying the polymer electrolyte membrane coated with the coating composition, and an ionomer-rich layer is formed.

In the step of drying the polymer electrolyte membrane, various drying methods such as hot air drying, vacuum drying, and infrared (IR) drying can be applied to the drying step. The temperature and time for drying can be appropriately adjusted according to the boiling point of the used solvent.

Still another embodiment of the present invention is a fuel cell including the above-described membrane-electrode assembly.

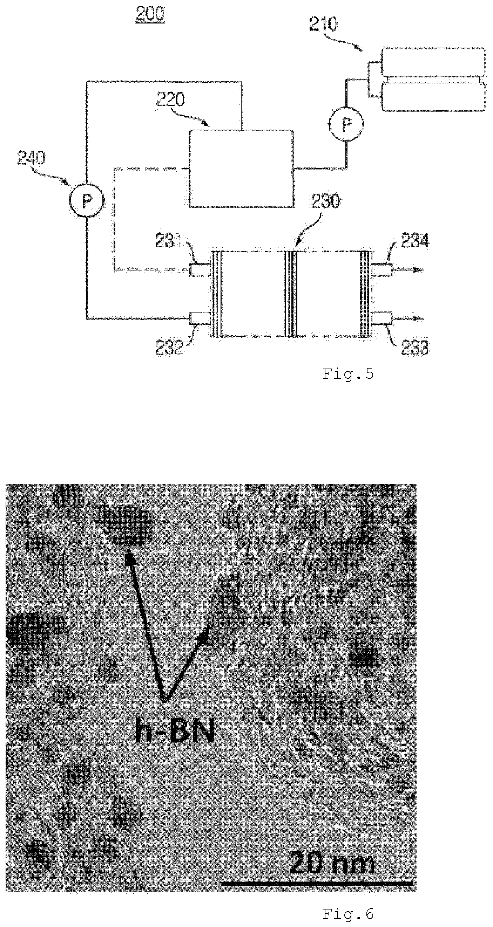

Fig. 5 is a schematic diagram for explaining a fuel cell according to an embodiment of the present invention.

According to Fig. 5, the fuel cell (200) according to the present invention may include a fuel supply unit (210) that supplies a mixed fuel obtained by mixing fuel and water; a reforming unit (220) that reforms the mixed fuel to generate a reformed gas including hydrogen gas; a stack (230) in which the hydrogen gas-including reformed gas supplied from the reforming unit (220) undergoes an electrochemical reaction with an oxidizing agent to generate electric energy; and an oxidizing agent supply unit (240) that supplies the oxidizing agent to the reforming unit (220) and the stack (230).

The stack (230) may be equipped with a plurality of unit cells that induce an oxidation/reduction reaction of the hydrogen gas-including reformed gas supplied from the reforming unit (220) and the oxidizing agent supplied from the oxidizing agent supply unit (240) and generate electric energy.

Each unit cell means a unit cell that generates electricity, and each unit cell may include the membrane-electrode assembly that oxidizes or reduces oxygen in the hydrogen gas-including reformed gas and the oxidizing agent; and a separator (or also referred to as bipolar plate; hereinafter, referred to as "separator") for supplying the hydrogen gas-including reformed gas and the oxidizing agent to the membrane-electrode assembly. The separator is disposed on both sides of the membrane-electrode assembly, which is disposed at the center. At this time, the separators respectively located on the outermost side of the stack are also referred to as end plates.

Among the separators, one of the end plates may be equipped with a pipe-shaped first supply tube (231) for injecting the hydrogen gas-including reformed gas supplied from the reforming unit (220); and a pipe-shaped second supply tube (232) for injecting oxygen gas, and the other end plate may be equipped with a first discharge tube (233) for discharging the hydrogen gas-including reformed gas that finally remains unreacted in a plurality of unit cells, to the outside; and a second discharge tube (234) for discharging the oxidizing agent that finally remains unreacted in the unit cells, to the outside.

In the fuel cell, since the separator constituting the electricity generating unit, the fuel supply unit, and the oxidizing agent supply unit are used in conventional fuel cells, further detailed description will not be repeated in the present specification.

Hereinafter, Examples of the present invention will be described in detail so that those having ordinary skill in the art to which the present invention is pertained can easily carry out the present invention; however, these Examples are given for illustrative purpose only, and the scope of rights of the present invention is not intended to be limited to the following description.

### [Production Example: Production of membrane-electrode assembly]

Membrane-electrode assemblies according to the following Comparative Examples and Examples were prepared.

### <Comparative Example 1>

10 g of a commercially available Pt/C catalyst manufactured by Tanaka Corporation was introduced into a reactor and was wetted with 50 g of water to prepare a mixed catalyst solution. 40 g of an amorphous first ionomer solution (10 wt%, equivalent 725 g/eq) was introduced into the reactor and then was dispersed using a high-pressure dispersing machine to prepare a first homogeneous mixture. A coating composition including the first homogeneous mixture was directly coated on one surface of a polymer electrolyte membrane, and a membrane-electrode assembly was manufactured.

### <Example 1>

9 g of a commercially available Pt/C catalyst manufactured by Tanaka Corporation was introduced into a reactor and was wetted with 200 g of water to prepare a synthetic catalyst solution. 30 g of an amorphous first ionomer solution (10 wt%, PFSA; equivalent 725 g/eq) was introduced into the reactor and then was dispersed using a high-pressure dispersing machine to prepare a first homogeneous mixture. The first homogeneous mixture was dried for 8 hours at 80°C and then was heat-treated for 2 hours at 120°C. To the heat-treated first homogeneous mixture, a second homogeneous mixture obtained by mixing 1 g of h-BN (hexagonal boron nitride) and 10 g of a second ionomer solution (10 wt%, S-PEEK; equivalent 725 g/eq) was added, and these mixtures were dispersed with a high-pressure dispersing machine to prepare a coating composition. The coating composition was directly coated on one surface of the polymer electrolyte membrane to manufacture a membrane-electrode assembly.

### <Example 2>

A membrane-electrode assembly was manufactured in the same manner as in Example 1, except that the equivalent of the first ionomer was 725 g/eq, and the equivalent of the second ionomer was 800 g/eq.

### <Example 3>

A membrane-electrode assembly was manufactured in the same manner as in Example 1, except that 1 g of core-shell type metal particles Cu@Ag (Cu core-Ag shell) were mixed with the second ionomer solution, instead of h-BN.

### <Example 4>

A membrane-electrode assembly was manufactured in the same manner as in Example 1, except that 1 g of multi-walled carbon nanotubes (MWCNT) were mixed with the second ionomer solution, instead of h-BN.

### [Experimental Example 1: Evaluation of chemical durability]

For Comparative Example 1, Example 1, and Example 2, the chemical durability was evaluated according to the durability evaluation protocol (90°C, 30%RH, 50 kPa, An = H₂/Ca = Air) of the Department of Energy (DOE) in the United States. Specifically, for the evaluation of the chemical durability of the membrane-electrode assembly, an OCY hold method was performed for 500 hours, and then the voltage loss was measured for each Example. The measurement values are shown in the following Table 1.

**[Table 1]**

| Sample | Comparative Example 1 | Example 1 | Example 2 |
|---|---|---|---|
| OCV voltage loss | 30% | 9 % | 8 % |

As shown in the Table 1, the membrane-electrode assemblies according to Examples 1 and 2 satisfied the DOE standard (voltage reduction ≤ 20% @ 500 hr) and exhibited chemical durability with reduced voltage loss, as compared with the membrane-electrode assembly according to Comparative Example 1. From the evaluation results such as described above, the membrane-electrode assemblies according to Examples 1 and 2 had improved chemical durability compared with Comparative Example 1.

### [Experimental Example 2: TEM image of electrode using h-BN as heat-dissipating material]

Fig. 6 is a transmission electron microscope (TEM) image of the electrode of the membrane-electrode assembly according to Example 1.

According to Fig. 6, it can be confirmed that the second composite (composite including the second ionomer and h-BN) is distributed around the first composite.

### [Experimental Example 3: TEM image of second composite for core-shell type metal particles]

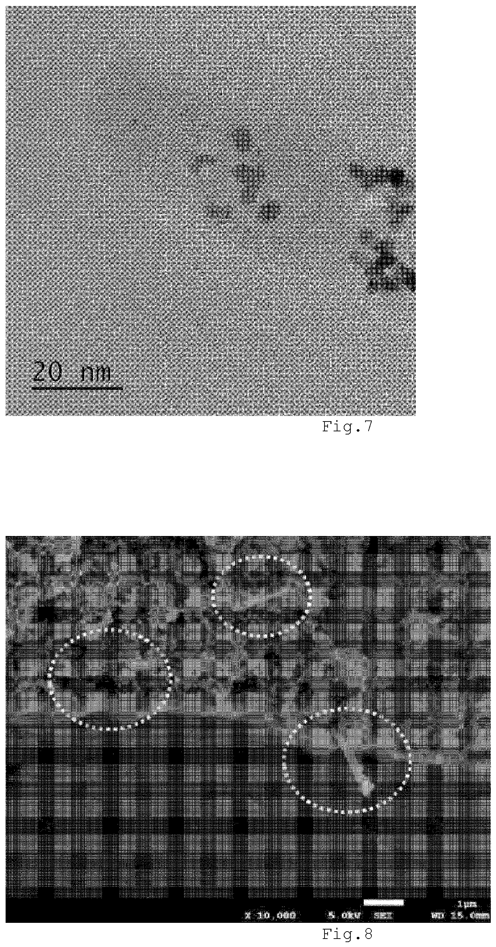

Fig. 7 is a transmission electron microscope (TEM) image of the second composite according to Example 3.

According to Fig. 7, it can be confirmed that the second composite (composite including the second ionomer and core-shell type metal particles) is distributed in the second homogeneous mixture.

### [Experimental Example 4: SEM image of electrode using CNT as heat-dissipating material]

Fig. 8 is a scanning electron microscope (SEM) image of the electrode of the membrane-electrode assembly according to Example 4.

According to Fig. 8, it can be seen that the second composite (composite including the second ionomer and carbon nanotubes) is randomly distributed at the interface of the polymer electrolyte membrane and the catalyst layer (or electrode).

### [Experimental Example 5: Experiment for demonstrating critical significance of content of heat-dissipating material]

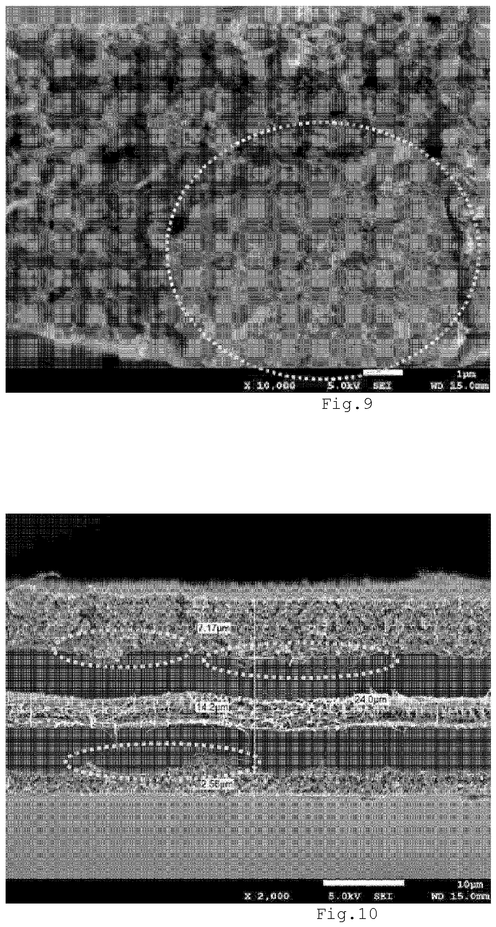

Fig. 9 is a scanning electron microscope (SEM) image of the electrode when the amount of h-BN (hexagonal boron nitride) was 52% by weight based on the total weight of the second homogeneous mixture.

According to Fig. 9, it can be seen that when the amount of h-BN is more than 50% by weight based on the total weight of the second homogeneous mixture, h-BN aggregates, and the second ionomer (or free ionomer) cannot increase the interfacial bonding force between the polymer electrolyte membrane and the catalyst layer.

### [Experimental Example 6: SEM image of first segment (or ionomer-rich layer)]

Fig. 10 is a scanning electron microscope (SEM) image showing the second composite randomly distributed at the interface between the catalyst layer for fuel cell and the polymer electrolyte membrane (or first segment) according to an embodiment of the present invention.

According to Fig. 10, it can be seen that the second composite in the first segment (or third segment) forms an ionomer-rich layer that is randomly disposed on both surface of the polymer electrolyte membrane.

Preferred embodiments of the present invention have been described in detail above; however, the scope of rights of the present invention is not limited to these, and it should be noted that various modifications and improvements made by an ordinarily skilled person using the basic concept of the present invention as defined in the following claims are also included in the scope of rights of the present invention.

## Claims

1. A catalyst layer for fuel cell comprising a first composite and a second composite,
wherein the first composite includes:
a supporting material;
a catalyst including metal particles supported on the supporting material; and
a first ionomer coated on the surface of the catalyst,
the second composite includes:
a heat-dissipating material; and
a second ionomer,
the second ionomer is not coated on the surface of the catalyst, and
the first ionomer and the second ionomer are identical with or different from each other.

2. The catalyst layer for fuel cell according to claim 1,
wherein the first ionomer and the second ionomer are different from each other.

3. The catalyst layer for fuel cell according to claim 2,
wherein the equivalent of the first ionomer and the equivalent of the second ionomer are each independently 600 to 1100 g/eq, and
the equivalent of the first ionomer and the equivalent of the second ionomer are different from each other.

4. The catalyst layer for fuel cell according to claim 2,
wherein any one of the first ionomer and the second ionomer is a fluorine-based ionomer, and the other is a hydrocarbon-based ionomer.

5. The catalyst layer for fuel cell according to claim 2,
wherein the first ionomer is a first hydrocarbon-based ionomer, and
the second ionomer is a second hydrocarbon-based ionomer different from the first hydrocarbon-based ionomer.

6. The catalyst layer for fuel cell according to claim 2,
wherein the first ionomer is a first fluorine-based ionomer, and
the second ionomer is a second fluorine-based ionomer different from the first fluorine-based ionomer.

7. The catalyst layer for fuel cell according to claim 1,
wherein the heat-dissipating material is any one selected from the group consisting of metal nanoparticles, ceramic nanoparticles, ultrahigh molecular weight polyethylene, polyacetylene, carbon-based nanoparticles, and combinations of these.

8. The catalyst layer for fuel cell according to claim 1,
wherein the supporting material is any one selected from the group consisting of a carbon-based supporting material, a porous inorganic oxide, zeolite, and combinations of these.

9. The catalyst layer for fuel cell according to claim 1,
wherein the metal particles are particles of any one selected from the group consisting of platinum, a platinum-based alloy, a non-platinum-based metal, and a non-platinum-based alloy.

10. The catalyst layer for fuel cell according to claim 1,
further comprising a functional additive.

11. The catalyst layer for fuel cell according to claim 10,
wherein the functional additive is at least one selected from the group consisting of a radical scavenger, gas barrier particles, a hydrophilic inorganic additive, an oxygen evolution reaction (OER) catalyst, and combinations of these.

12. A method for manufacturing a fuel cell catalyst layer, the method comprising:
(S1) a step of homogeneously mixing a first ionomer solution and an aqueous solution having a catalyst dispersed therein and dispersing these solutions to prepare a first homogeneous mixture; and
(S2) a step of adding a second homogeneous mixture obtained by mixing a heat-dissipating material and a second ionomer solution to the first homogeneous mixture and dispersing these mixtures to prepare a coating composition.

13. The method for manufacturing a catalyst layer for fuel cell according to claim 12,
further comprising a step of drying the first homogeneous mixture at 80°C to 100°C for 8 to 10 hours and then heat-treating the dried first homogeneous mixture at 100°C to 120°C for 2 to 4 hours,
between the step (S1) and the step (S2).

14. The method for manufacturing a catalyst layer for fuel cell according to claim 12,
wherein the heat-dissipating material is included in an amount of 1% to 51% by weight based on the total weight of the second homogeneous mixture.

15. A membrane-electrode assembly comprising:
a polymer electrolyte membrane; and
the catalyst layer for fuel cell according to claim 1 disposed on at least one surface of the polymer electrolyte membrane.

16. The membrane-electrode assembly according to claim 15,
wherein the catalyst layer for fuel cell includes:
a first segment in contact with the polymer electrolyte membrane; and
a second segment disposed on the first segment.

17. The membrane-electrode assembly according to claim 16,
wherein the second segment does not include the second composite, or
the content of the second composite per unit volume of the second segment is smaller than the content of the second composite per unit volume of the first segment.

18. The membrane-electrode assembly according to claim 16,
wherein the thickness of the first segment is 10 to 800 nm (nanometers), and
the thickness of the second segment is 0.5 to 20 µm (micrometers).

19. A method for manufacturing a membrane-electrode assembly, the method comprising:
a step of directly coating a coating composition on at least one surface of a polymer electrolyte membrane; and
a step of drying the polymer electrolyte membrane coated with the coating composition,
wherein a method for preparing the coating composition includes:
(S1) a step of homogeneously mixing a first ionomer solution and an aqueous solution having a catalyst dispersed therein, and dispersing these solutions to prepare a first homogeneous mixture; and
(S2) a step of adding a second homogeneous mixture obtained by mixing a heat-dissipating material and a second ionomer solution to the first homogeneous mixture and dispersing these mixtures.

20. A fuel cell comprising the membrane-electrode assembly according to any one of claims 15 to 18.
